# EUROPÄISCHE PATENTSCHRIFT

(11) **EP 1 399 818 B1**
(45) Veröffentlichungstag und Bekanntmachung des Hinweises auf die Patenterteilung: **23.03.2005**
(21) Anmeldenummer: 02776494.3
(22) Anmeldetag: 06.06.2002
(51) Int. Cl.: G06F 11/00

(54) **VERFAHREN UND VORRICHTUNG ZUR KOMMUNIKATION IN EINEM FEHLERTOLERANTEN VERTEILTEN COMPUTERSYSTEM**
METHOD AND DEVICE FOR COMMUNICATING IN A FAULT-TOLERANT DISTRIBUTED COMPUTER SYSTEM
PROCEDE ET DISPOSITIF DE COMMUNICATION DANS UN SYSTEME INFORMATIQUE REPARTI TOLERANT AUX ERREURS

(30) Priorität: 06.06.2001 AT 8812001
(43) Veröffentlichungstag der Anmeldung: 24.03.2004
(73) Patentinhaber: FTS Computertechnik Ges.mbH, 2500 Baden-Siegenfeld (AT)
(72) Erfinder: KOPETZ, Hermann, A-2500 Baden bei Wien (AT)
(74) Vertreter: Patentanwaltskanzlei Matschnig
(86) Internationale Anmeldenummer: PCT/AT2002/000169
(87) Internationale Veröffentlichungsnummer: WO 2002/099643

(56) Entgegenhaltungen:
- EP-A- 0 378 804
- WO-A-01/13230
- GB-A- 1 458 200
- US-A- 5 483 658

## Beschreibung

Diese Erfindung bezieht sich auf ein Verfahren zur Kommunikation in einem fehlertoleranten verteilten Computersystem, in welchem Nachrichten von Knotenrechnern, von welchen zumindest einer mehrere Software-Subsysteme enthält, über ein oder mehrere Kommunikationskanäle gesandt werden und die zeitliche Korrektheit einer Nachricht durch einen von den Knotenrechnern unabhängigen Guardian überprüft wird.

Ebenso bezieht sich die Erfindung auf einfehlertolerantes verteiltes Computersystem mit einer Vielzahl von Knotenrechnern, von welchen zumindest eines mehrere Software-Subsysteme enthält, die Knotenrechner über einen oder mehrere Kommunikationskanäle verbunden sind und zumindest ein unabhängiger Guardian vorgesehen ist, welcher die zeitliche Korrektheit von Nachrichten überprüft.

Ein bekanntes Verfahren bzw. Computersystem dieser Art wird in der nachstehenden Erläuterung zum Stand er Technik beschrieben aber auch in der WO 01/13230 A1 der Anmelderin geoffenbart. Das bekannte Dokument zeigt ein Verfahren zur Erzielung einer "failsilent" Eigenschaft in dem Zeitbereich von Knotenrechnern eines fehlertoleranten, verteilten Computersystems, in welchem eine Vielzahl von Knotenrechnern über eine Verteilereinheit miteinander verbunden sind, wobei in die Verteiler Einheit ein Guardian integriert ist, welcher anhand eines ihm a priori bekannten Sendeschemas das Sendeverhalten der Knotenrechner überprüft. Durch die Integration des Guardians, der weiters über eine unabhängige Zeitbasis verfügt und das Sendeverhalten der Knotenrechnung kontinuierlich überwacht, kann verhindert werden, dass ein fehlerhafter Netzknoten in dem Zeitbereich einen sogenannten "Babbling Idiot" Fehler verursacht.

Die EP 0 378 804 A2 bezieht sich auf die Überprüfung der Korrektheit von Netzknoten zugeordneten Namen in einem lokalen Netzwerk, wobei das Entdecken eines falschen Namens nicht zu einer Unterbrechung der Kommunikation zwischen den Netzknoten führt. Der fehlerhafte Netzknoten wird lediglich nach Rückfrage durch einen Monitorknoten aufgefordert sich vom Netz zu lösen. Das bekannte Verfahren geht davon aus, dass die fehlerhafte Einheit in der Lage ist, den Fehler zu beheben bzw. sich vom Netzwerk zu lösen. Nachteilig an dem bekannten Verfahren ist vor allem, dass es nicht für echtzeitkritische Anwendungen geeignet ist. Zum einen ist bei echtzeitkritischen Anwendungen eine Rückfrage bei einer fehlerhaften Einheit, bevor diese vom Netz gelöst wird, aus Gründen der Betriebssicherheit nicht möglich, zum anderen ist das Risiko zu groß, die Eliminierung eines fehlerhaften Netzknotens sich selbst zu überlassen.

Sicherheitskritische technische Anwendungen, das sind insbesondere Anwendungen, bei welchen ein Fehler zu einer Katastrophe führen kann, werden zunehmend von verteilten fehlertoleranten Echtzeitcomputersystemen geführt.

In einem verteilten sicherheitskritischen Echtzeitcomputersystem, bestehend aus einer Anzahl von Knotenrechnern und einem Echtzeitkommunikationssystem, soll jeder Einzelfehler eines Knotenrechners erkannt und nach Möglichkeit toleriert werden. Im Kern einer solchen Computerarchitektur befindet sich ein fehlertolerantes Echtzeitkommunikationssystem zum vorhersehbar schnellen und sicheren Austausch von Nachrichten. In der Echtzeitdatenverarbeitung ist oft eine Multicastkommunikationsstruktur erforderlich, die durch eine Broadcasttopologie der Kommunikation unterstützt wird. Eine Broadcasttopologie der Kommunikation kann physikalisch entweder durch ein verteiltes Bussystem, ein verteiltes Ringsystem oder durch eine zentrale Verteilereinheit (z.B. einen Sternkoppler) mit Punkt-zu-Punkt Verbindungen zu den Knotenrechnern aufgebaut werden.

Eine Multicast Kommunikation bietet auch die Flexibilität, Software-Subsysteme in unterschiedlichen Anwendungsfällen unterschiedlichen Rechnerknoten zuzuweisen, wobei die Bedeutung der Daten innerhalb einer Nachricht durch einen Nachrichtennamen, der innerhalb der Nachricht enthalten ist, bestimmt wird. Dieses Verfahren der Datenkennung wird z.B. in dem weit verbreiteten CAN Kommunikationssystem eingesetzt, welches beispielsweise in Kopetz, H. (1997). *Real-Time Systems, Design Principles for Distributed Embedded Applications; ISBN: 0-7923-9894-7*. Boston. Kluwer Academic Publishers., p.161 beschrieben ist. Durch eine solche Zuordnung des Nachrichtennamens zu den Daten erhöht man die gewünschte Flexibiltät der Softwarekonfiguration.

In einem verteilten fehlertoleranten Echtzeitcomputersystem, bestehend aus einer Anzahl von Knotenrechnern und einem Echtzeitkommunikationssystem, muss auch der Ausfall eines Knotenrechners toleriert werden. Im Kern einer solchen Computerarchitektur befindet sich ein fehlertolerantes Echtzeitkommunikationssystem zum vorhersehbar schnellen und sicheren Austausch von Nachrichten.

Ein Kommunikationsprotokoll, das diese Anforderungen erfüllt, ist in der EP 0 658 257 A (WO 94/06080) beschrieben. Dieses Protokoll ist unter dem Namen "Time-Triggered Protokoll/C (TTP/C)" bekannt geworden. Es basiert auf dem bekannten zyklischen Zeitscheibenverfahren (TDMA-time-division multiple access) mit a priori festgelegten Zeitscheiben. Das Protokoll TTP/C verwendet ein Verfahren zur fehlertoleranten Uhrensynchronisation, das in der US 4,866,606 A geoffenbart ist.

Das Protokoll TTP/C setzt voraus, dass das Kommunikationssystem die genannte logische Broadcasttopologie unterstützt und dass die Knotenrechner aus der Sicht der Empfänger ein "fail-silence" (Kopetz, p. 121) Ausfallverhalten zeigen, d.h. entweder die Knotenrechner funktionieren korrekt im Wertebereich und im Zeitbereich oder sie sind ruhig. Die Verhinderung von Fehlern im Zeitbereich, - sogenannten "Babbling Idiot" Fehlern - (Kopetz, p. 130 sowie Annual Int. Symposium on Fault-Tolerant Computing, 23. Juni 1998, Seiten 218-227, IEEE Computer Soc., Los Alamitos, CA, US; Temple C.: "Avoiding the Babbling-Idiot Failure in a Time-Triggered Communication System"), wird in dem Protokoll TTP/C durch eine unabhängige Fehlererkennungseinheit, den sogenannten "Guardian", erreicht, der über eine unabhängige Zeitbasis verfügt und das Zeitverhalten des Knotenrechners kontinuierlich überprüft. Um die Fehlertoleranz zu realisieren, werden mehrere fail-silent Knotenrechner zu einer fehlertoleranten Einheit (fault-tolerant unit - FTU) zusammengefasst und das Kommunikationssystem repliziert. Solange ein Knotenrechner einer FTU und ein Replikat des Kommunikationssystems funktionieren, werden die Dienste der FTU im Zeit- und Wertebereich rechtzeitig erbracht.

Der Empfänger einer Nachricht kann jedoch nicht feststellen, ob ein Knotenrechner berechtigt ist, eine Nachricht zu senden, die von einem bestimmten Software-Subsystem stammt. Es besteht somit im Fehlerfall die Möglichkeit, dass ein einziger fehlerhafter Knotenrechner falsche Nachrichtennamen produziert und in der Folge die richtigen Nachrichten von anderen, korrekt funktionierender Knotenrechnern beim Empfänger überschrieben werden. Somit kann in einem solchen System ein Fehler in einer einzigen Komponente zum Ausfall von mehreren anderen Komponenten führen und ein sicheres System, das nur einen unabhängigen Komponentenausfall toleriert, zu Fall bringen. Diese Fehlerart ist in der Literatur unter dem Namen "Masquerading Fault" bekannt geworden.

Eine Aufgabe der Erfindung liegt darin, Masquerading Faults von Knotenrechnern in einem verteilten Echtzeitcomputersystems zu erkennen und zu verhindern.

Die gestellte Aufgabe wird mit einem Verfahren gemäß Anspruch 1 gelöst, bei welchem erfindungsgemäß jedes Software-Subsystem durch ein Subsystemkennzeichen markiert wird, dem Guardian a priori mitgeteilt wird, welche Subsystemkennzeichen von jedem einzelnen der Knotenrechner ausgegeben werden dürfen, und durch den Guardian während der Kommunikation zusätzlich die Korrektheit der Zuordnung der Software-Subsysteme zu den Knotenrechnern überprüft wird, wobei der Guardian die Kommunikation unterbricht, falls empfangene Subsystemkennzeichen von Knotenrechnern ausgegeben wurden, die dazu nicht berechtigt sind.

Ebenso wird die Aufgabe mit einem Computersystem gemäß Anspruch 4 gelöst, bei welchem erfindungsgemäß jedem Software-Subsystem ein Subsystemkennzeichen zugeordnet ist, der zumindest eine Guardian a priori die Information enthält, welche Subsystemkennzeichen von jedem einzelnen der Knotenrechner ausgegeben werden dürfen, und der Guardian dazu eingerichtet ist, während der Kommunikation zusätzlich die Korrektheit der Zuordnung der Software-Subsysteme zu den Knotenrechnern zu überprüfen, und die Nachricht zu verwerfen, falls empfangene Subsystemkennzeichen von einem zur Ausgabe dieser Kennzeichen nicht berechtigen Knotenrechner ausgegeben wurde.

Einem intelligenten zentralen oder verteilten Guardian wird somit *a priori* mitgeteilt, welche Knotenrehner welche Subsystemdaten beinhalten. Es ist dem intelligenten Guardian somit während des Betriebes möglich, einen Knotenrechner zu erkennen der Nachrichten produziert, die er nicht produzieren darf. Eine solche falsch erkannte Nachricht wird in der Folge von dem Guardian vernichtet, um zu verhindern, dass der Fehler weiteren Schaden anrichtet.

Es ist weiters von Vorteil, wenn das Subsystemkennzeichen je vor das zugehörige Datenfeld gesetzt wird, da hierdurch der Guardian in der Lage ist, auf das erste Subsystemkennzeichen sofort zugreifen zu können.

Bei einer zweckmäßigen Ausführungsform wird zwischen ein Subsystemkennzeichen und das zugehörige Datenfeld ein Pointer gesetzt, der auf das nächste Subsystemkennzeichen verweist. Dadurch kann der Guardian schnell von einem Subsystemkennzeichen zu dem nächsten springen, ohne den Inhalt der Nachricht analysieren zu müssen.

Sinngemäße Vorteile bieten entsprechend den Ansprüchen 5 und 6 ausgestaltete Computersysteme nach der Erfindung.

Wenn die Knotenrechner über zumindest eine, einen Guardian enthaltende Verteilereinheit miteinander verbunden sind, so können alle Guardians in diese Verteilereinheit integriert werden.

Die Erfindung samt weiterer Vorteile wird im Folgenden an Hand einer beispielsweisen Ausführungsform näher erläutert, die unter Zuhilfenahme der Zeichnung veranschaulicht ist. In dieser zeigen
- Fig.1: schematisch ein verteiltes Computersystem, bestehend aus vier Knotenrechnern, die über zwei zentrale Verteilereinheiten miteinander verbunden sind, und
- Fig.2: den möglichen Aufbau einer im Zusammenhang mit der Erfindung verwendeten Nachricht.

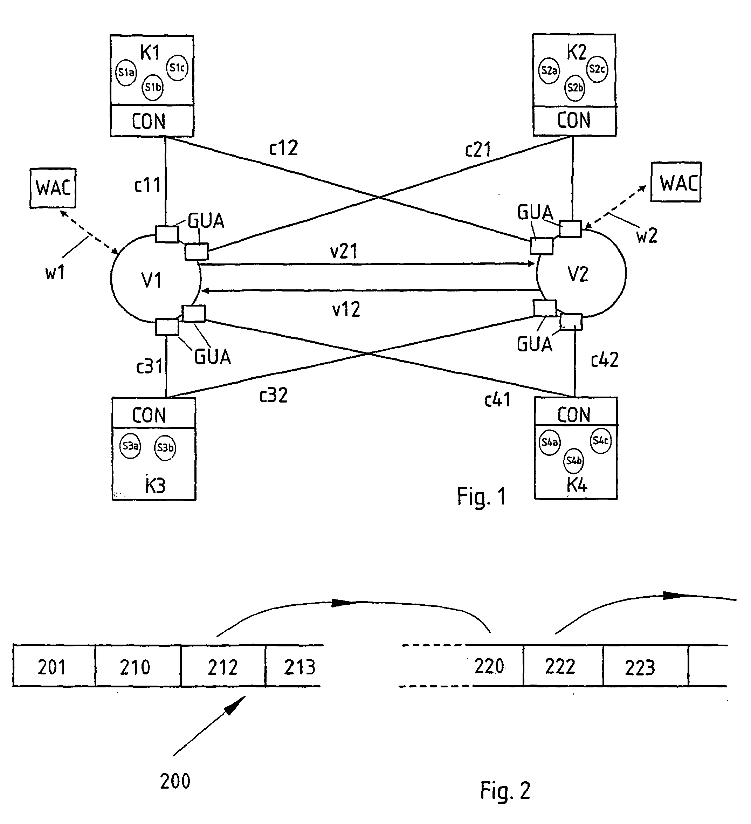

Fig. 1 zeigt ein System von vier Knotenrechnern K1, K2, K3, K4, wobei jeder Knotenrechner eine austauschbare Einheit bildet und mit je einer Punkt-zu-Punkt Verbindung oder Kommunikationskanal c11 ... c42 mit einer von zwei replizierten zentralen Verteilereinheiten V1 oder V2 verbunden ist. Zwischen jedem Ausgang eines Knotenrechners und jedem Eingang der Verteilereinheit befindet sich ein Guardian GUA, der entweder selbständig ausgeführt ist oder in die Verteilereinheit integriert werden kann. Die prinzipielle Funktion eines Guardian oder BusGuardian ist in Kopetz, p. 173 erläutert. Um seine Funktion erfüllen zu können, benötigt ein Guardian neben einem Controller auch Schalter um Kanäle zu öffnen bzw. zu sperren. Zwei unidirektionale Kommunikationskanäle v21, v12 zwischen den Verteilereinheiten V1 und V2 dienen der wechselseitigen Überwachung und dem Informationsaustausch der zentralen Verteilereinheiten V1 und V2. Wie gleichfalls aus Kopetz, z. B. p. 172 - 177, hervorgeht, besitzt jeder Knotenrechner K1 ... K4 einen autonomen Controller CON oder Kommunikationscontroller, der mit den replizierten Kommunikationskanälen, z. B. c11, c12 verbunden ist. Angedeutete Verbindungen w1, w2 sind dedizierte Kommunikationskanäle. Sie führen zu Wartungscomputern w1, w2, welche die Parameter der Verteilereinheiten und deren korrekte Funktionen überwachen können.

Fig. 2 zeigt den Aufbau einer Nachricht. Nach dem Nachrichtenheader 201 folgt ein Feld 210, das das Subsystemkennzeichen, d.h. den Namen eines Softwaresubsystems, enthält. Unmittelbar nach diesem Feld liegt ein Pointer 212, der zum nächsten Subsystemkennzeichen 220 verweist. Dies ist in der Fig. 2 durch den Pfeil 211 ausgedrückt. Nach dem Pointer 212 folgt die Datenstruktur des Subsystems 210. Am Ende dieser Datenstruktur dynamischer Länge befinden sich innerhalb der gleichen Nachricht die Daten von weiteren Subsystemen, die durch das Subsystemkennzeichenfeld 220, das Pointerfeld 222, den Zeigerinhalt 221, und das Datenfeld 223 angedeutet sind. Diese Datenstruktur wird fortgesetzt, bis das Ende der Nachricht erreicht ist.

Der zentralen Verteilereinheit 101 bzw. 102 wird *a priori,* d.h. vor der Laufzeit des Systems, in einer Softwareallokationsdatenstruktur mitgeteilt, auf welchen Kommunikationskanälen C11 ... C42 welche Knotenrechner angeschlossen sind, und welchen Knotenrechnern die Software-Subsysteme zugeordnet sind. Eine zentrale Verteilereinheit V1, V2 kann beim Empfang einer Nachricht auf der Basis der physikalischen Struktur feststellen, auf welchem Kanal C11 ... C42 die Nachricht eintrifft und damit, von welchem Knotenrechner K1 bis K4 die Nachricht stammt. Die Namen der Software-Subsysteme (das Subsystem-Kennzeichen) 210 und 220, denen die Nachricht zugeordnet ist, erfährt die zentrale Verteilereinheit V16 und V2 dynamisch aus der empfangenen Nachricht über die Subsystemkennzeichenfelder 210 und 220, die in der Nachricht enthalten sind. Anschließend überprüft die zentrale Verteilereinheit unter Bezugnahme auf die ihr *a priori* bekannten Softwareallokationsdatenstruktur, ob der sendende Knotenrechner die Berechtigung besitzt, die Daten dieses Subsystems zu senden. Falls die Berechtigung nicht gegeben ist, macht der zentrale Knotenrechner die ausgehene Nachricht ungültig, z.B. durch Abschneiden der Nachricht. Damit wird verhindert, dass ein fehlerhafter Knotenrechner falsche Nachrichten an die richtig funktionierenden Knotenrechner senden kann.

Wenn nun ein Software-Subsystem K1, das Nachrichten an den Knotenrechner K4 sendet, von einem Knotenrechner, z.B. K1, auf einen anderen Knotenrechner, z.B., K2 verlagert wird, so muss der zentralen Verteilereinheit *a priori* mitgeteilt werden, dass ab einem festgesetzten Zeitpunkt die Nachrichten von dem anderen Knotenrechner kommen werden. Der Knotenrechner K4 braucht nicht geändert zu werden. In der beschriebenen Architektur ist es somit nicht möglich, dass sich ein Fehler von einem einziger falschen Knotenrechner auf alle anderen Knotenrechner fortpflanzt.

Diese Erfindung bringt folgende zwei ökonomische Vorteile. Erstens kann in einem sicherheitskritischen System die Zuordnung von Software-Subsystemen zu Knotenrechnern dynamisch geändert werden, ohne die Software in den Empfängerknoten ändern zu müssen. Zweitens können innerhalb einer einzigen Nachricht die Daten von mehreren verschieden Susbsystemen enthalten sein und von der zentralen Verteilereinheit differenziert überprüft werden. Somit können lange Nachrichten aufgebaut werden, was bei hohen Bandbreiten zur Erhöhung der Nutzdatenrate von besonderer Wichtigkeit ist.

Die Erfindung ist für zeitgesteuerte Systeme gemäß der EP 0 658 257 B1 und der WO 01/13230 A1 ,die über eine replizierte zentrale Verteilereinheit verfügen, von besonderer Bedeutung, da bei Erweiterung der bereits vorhandenen zentralen Verteilereinheiten um das hier beschriebene Verfahren die Sicherheit auch bei flexibler Software-Allokation gewährleistet ist, jedoch nur unwesentliche Mehrkosten entstehen.

Es ist natürlich möglich, das beschriebene Verfahren zur Überprüfung von Nachrichten auch bei dezentralen Bus Guardians einzusetzen.

## Patentansprüche

1. Verfahren zur Kommunikation in einem fehlertoleranten verteilten Computersystem, in welchem Nachrichten (200) von Knotenrechnern (K1 ... K4), von welchen zumindest einer mehrere Software-Subsysteme (S1a ... S4c) enthält, über ein oder mehrere Kommunikationskanäle (C11 ... C 42) gesandt werden und die zeitliche Korrektheit einer Nachricht durch einen von den Knotenrechnern unabhängigen Guardian (GUA) überprüft wird, und der Guardian gegebenenfalls die Kommunikation unterbricht,
**dadurch gekennzeichnet, dass**
jedes Software-Subsystem (S1a ... S4c) durch ein Subsystemkennzeichen (210, 220) markiert wird, dem Guardian (GUA) a priori mitgeteilt wird, welche Subsystemkennzeichen von jedem einzelnen der Knotenrechner (112 ... 114) ausgegeben werden dürfen, und durch den Guardian während der Kommunikation zusätzlich die Korrektheit der Zuordnung der Software-Subsysteme zu den Knotenrechnern überprüft wird, wobei der Guardian die Kommunikation unterbricht, falls empfangene Subsystemkennzeichen von Knotenrechnern ausgegeben wurden, die dazu nicht berechtigt sind.

2. Verfahren nach Anspruch 1, **dadurch gekennzeichnet, dass** das Subsystemkennzeichen (210,220) je vor das zugehörige Datenfeld (213, 223) gesetzt wird.

3. Verfahren nach Anspruch 2, **dadurch gekennzeichnet, dass** zwischen ein Subsystemkennzeichen (210) und das zugehörige Datenfeld (213) ein Pointer (212) gesetzt wird, der auf das nächste Subsystemkennzeichen (220) verweist.

4. Fehlertolerantes verteiltes Computersystem mit einer Vielzahl von Knotenrechnern (K1 ... K4), von welchen zumindest einer mehrere Software-Subsysteme (S1a ... S4c) enthält, die Knotenrechner über einen oder mehrere Kommunikationskanäle (C11 ... C42) verbunden sind und zumindest ein unabhängiger Guardian (GUA) vorgesehen ist, welcher die zeitliche Korrektheit von Nachrichten (200) überprüft, und welcher gegebenenfalls Nachrichten verwirft,
**dadurch gekennzeichnet, dass**
jedem Software-Subsystem (S1a ... S4c) ein Subsystemkennzeichen zugeordnet ist, der zumindest eine Guardian (GUA) a priori die Information enthält, welche Subsystemkennzeichen von jedem einzelnen der Knotenrechner (K1 ... K4) ausgegeben werden dürfen, und der Guardian dazu eingerichtet ist, während der Kommunikation zusätzlich die Korrektheit der Zuordnung der Software-Subsysteme zu den Knotenrechnern zu überprüfen, und die Nachricht zu verwerfen, falls empfangene Subsystemkennzeichen von einem zur Ausgabe dieser Kennzeichen nicht berechtigten

5. Computersystem nach Anspruch 4, **dadurch gekennzeichnet, dass** die Subsystemkennzeichen (210, 220) innerhalb einer Nachricht vor dem zugehörigen Datenfeld (213, 223) angeordnet sind.

6. Computersystem nach Anspruch 5, **dadurch gekennzeichnet, dass** zwischen ein Subsystemkennzeichen (210) und dem zugehörigen Datenfeld (213) ein Pointer (212) liegt, der auf das nächste Subsystemkennzeichen (220) verweist.

7. Computersystem nach einem der Ansprüche 4 bis 6, **dadurch gekennzeichnet, dass** die Knotenrechner (K1 ... K4) über zumindest eine, einen Guardian (GUA) enthaltende Verteilereinheit (V1, V2) miteinander verbunden sind.

## Claims

1. A method of communication in a fault tolerant distributed computer system, in which messages (200) are transmitted by remote communication computers (K1 - K4), of which at least one contains a plurality of software subsystems (S1a - S4c), through one or more communication channels (C11 - C42) and the time correctness of a message is checked by a guardian (GUA) which is self-contained relative to said remote communication computers and will optionally interrupt communication,
**characterized in that**
each software subsystem (S1a - S4c) is marked by a subsystem identifier (210, 220), and said guardian (GUA) is *a priori* informed as to which subsystem identifiers may be outputted by each of the remote communication computers (112 - 114) and will additionally check, during communication, the correctness of the assignment of the software subsystems to said remote communication computers and will interrupt communication when received subsystem identifiers have been outputted by remote communication computers that are not authorized to do so.

2. A method as defined in claim 1, **characterized in that** said subsystem identifier (210, 220) is always placed in advance of the associated data field (213, 223).

3. A method as defined in claim 2, **characterized in that** between a subsystem identifier (210) and the associated data field (213) there is set a pointer (212) that points to the next subsystem identifier (220).

4. A fault tolerant distributed computer system having a plurality of remote communication computers (K1 - K4), of which at least one contains a plurality of software subsystems (S1a - S4c), said remote communication computers being interconnected via one or more communication channels (C11 - C42), whilst at least one self-contained guardian (GUA) is provided which checks the time correctness of a message (200) and will optionally discard messages,
**characterized in that**
a subsystem identifier is assigned to each software subsystem (S1a - S4c), said at least one guardian (GUA) contains *a priori* information as to which subsystem identifiers may be outputted by each of the remote communication computers (K1 - K4), and said guardian is adapted to additionally check, during communication, the correctness of the assignment of said software subsystems to said remote communication computers and to discard a message when received subsystem identifiers have been outputted by a remote communication computer that is not authorized to do so.

5. A computer system as defined in claim 4, **characterized in that** said subsystem identifiers (210, 220) are disposed in a message in advance of the associated data field (213, 223).

6. A computer system as defined in claim 5, **characterized in that** between a subsystem identifier (210) and the associated data field (213) there is set a pointer (212) that points to the next subsystem identifier (220).

7. A computer system as defined in any one of claims 4 to 6, **characterized in that** said remote communication computers (K1 - K4) are interconnected through at least one distribution unit (V I, V2) containing a guardian (GUA).

## Revendications

1. Procédé de communication dans un système informatique réparti tolérant aux erreurs, dans lequel des informations (200) sont envoyées par des ordinateurs nodaux (K1 ... K4), dont au moins un contient plusieurs sous-systèmes de logiciels (S1a ... S4c), via un canal ou plusieurs canaux de communication (C11 ... C42) et l'exactitude temporelle d'une information est contrôlée par un garde (GUA) indépendant des ordinateurs nodaux, et le garde interrompt éventuellement la communication, **caractérisé en ce que** chaque sous-système de logiciel (S1a ... S4c) est marqué par un indicateur de sous-système (210, 220), est communiqué a priori au garde (GUA), indicateurs de sous-systèmes qui peuvent être émis par chacun des ordinateurs nodaux individuellement (112 ... 114), et l'exactitude de l'attribution des sous-systèmes de logiciels aux ordinateurs nodaux est contrôlée en outre par le garde pendant la communication, le garde interrompant la communication au cas où des indicateurs de sous-systèmes reçus ont été émis par des ordinateurs nodaux, qui ne sont pas habilités à le faire.

2. Procédé selon la revendication 1, **caractérisé en ce que** l'indicateur de sous-système (210, 220) est chaque fois placé avant le champ de données associé (213, 223).

3. Procédé selon la revendication 2, **caractérisé en ce qu'**un pointeur (212), qui renvoie à l'indicateur de sous-système suivant (220), est placé entre un indicateur de sous-système (210) et le champ de données associé (213).

4. Système informatique réparti tolérant aux erreurs avec une pluralité d'ordinateurs nodaux (K1 ... K4), dont au moins un contient plusieurs sous-systèmes de logiciels (S1a ... S4c), dans lequel les ordinateurs nodaux sont reliés via un canal ou plusieurs canaux de communication (C11 ... C42) et il est prévu au moins un garde indépendant (GUA), qui contrôle l'exactitude temporelle d'informations (200) et qui rejette éventuellement des informations, **caractérisé en ce qu'**à chaque sous-système de logiciels (S1a ... S4c) est associé un indicateur de sous-système, le au moins un garde (GUA) contient a priori l'information précisant quels indicateurs de sous-systèmes peuvent être émis par chacun des ordinateurs nodaux individuellement (K1 ... K4), et le garde est construit de façon à contrôler en plus, pendant la communication, l'exactitude de l'attribution des sous-systèmes de logiciels aux ordinateurs nodaux et à rejeter l'information, au cas où des indicateurs de sous-systèmes reçus ont été émis par un ordinateur nodal non habilité à émettre ces indicateurs.

5. Système informatique selon la revendication 4, **caractérisé en ce que** les indicateurs de sous-systèmes (210, 220) sont disposés à l'intérieur d'une information, avant le champ de données associé (213, 223).

6. Système informatique selon la revendication 5, **caractérisé en ce qu'**un pointeur (212), qui renvoie à l'indicateur de sous-système suivant (220), est placé entre un indicateur de sous-système (210) et le champ de données associé (213).

7. Système informatique selon l'une quelconque des revendications 4 à 6, **caractérisé en ce que** les ordinateurs nodaux (K1 ... K4) sont reliés les uns aux autres via au moins une unité de répartition (V1, V2) contenant un garde (GUA).
